# EUROPÄISCHE PATENTSCHRIFT

(11) **EP 0 745 334 B1**
(45) Veröffentlichungstag und Bekanntmachung des Hinweises auf die Patenterteilung: **07.01.1998**
(21) Anmeldenummer: 96108626.1
(22) Anmeldetag: 30.05.1996
(51) Int. Cl.: A23N 12/08

(54) **Anordnung zum Rösten von pflanzlichem Schüttgut, insbesondere Kaffeebohnen**
Device for roasting buck plant material, especially coffee beans
Dispositif pour griller des matières végétables en vrac, en particulier des grains de café

(30) Priorität: 01.06.1995 DE 19520228
(43) Veröffentlichungstag der Anmeldung: 04.12.1996
(73) Patentinhaber: Probat-Werke von Gimborn Maschinenfabrik GmbH, 46446 Emmerich (DE)
(72) Erfinder: Finken, Hermann, 47533 Kleve (DE); Jansen, Gerhard, 7041 JH 's Heerenberg (NL); Naves, Erwin, 46539 Dinslaken (DE)
(74) Vertreter: Liska, Horst, Dr.-Ing.

(56) Entgegenhaltungen:
- EP-A- 0 288 870
- EP-A- 0 578 902
- DE-A- 2 501 352
- DE-A- 3 711 098

## Beschreibung

Die Erfindung betrifft eine Anordnung zum Rösten von pflanzlichem Schüttgut, insbesondere Kaffeebohnen.

Beim Rösten von pflanzlichem Schüttgut, wie z.B. Kaffee, Kakao, Getreide oder Nüssen, entstehen mit Geruchsstoffen beladene Röstabgase. Ähnliche mit Geruchsstoffen beladene Angase entstehen bei der auf den Röstvorgang folgenden Kühlung des Röstguts. Im Röster wird das Röstgut üblicherweise einem auf entsprechender Temperatur erhitzten Röstluftstrom ausgesetzt, der nach dem Röster beispielsweise in einem Zentrifugalabscheider (Zyklon) von Staub oder Röstgutabfallprodukten, wie z.B. Kaffeehäutchen, mechanisch gereinigt und dann zur Minderung oder Eliminierung der Geruchsstoffe nachbehandelt wird. Die Nachbehandlung kann thermisch beispielsweise durch Nachverbrennung, katalytisch oder auch mittels eines Adsorptionsfilters erfolgen. Da die Erwärmung der gesamten Röstabgase mit hohem Energieverbrauch verbunden ist, ist es bekannt, einen Teil der aus dem Röster austretenden Röstgase lediglich mechanisch zu reinigen und im Kreislauf nach erneuter Erwärmung in einem Ofen, beispielsweise einem Öl- oder Gasbrenner, thermisch aufzubereiten und erneut dem Röster zuzuführen. Der Energieverbrauch der Röstanlage kann auf diese Weise beträchtlich gesenkt werden.

Die zur Kühlung des Röstguts nach dem Röstvorgang benutzten Kühlgase (z.B. Luft) werden üblicherweise nur mechanisch gereinigt, beispielsweise mittels eines Fliehkraftabscheiders, um dann einschließlich der darin noch enthaltenen Geruchsstoffe in die Atmosphäre abgeblasen zu werden. Solche Kühlverfahren belasten die Atmosphäre insbesondere mit Geruchsstoffen.

Aus DE-25 01 352 C2 ist eine Röstvorrichtung bekannt, bei der die in einem Brenner erhitzten Röstgase (Röstluft) über eine Röstkammer und einen Fliehkraftabscheider im Kreislauf zum Brenner zurückgeführt werden. Der beim Rösten entstehende Röstgasüberschuß wird nach dem Fliehkraftabscheider abgezweigt und nach einer Nachverbrennung in einem zweiten Brenner in die Atmosphäre entlassen. Die an die Röstkammer anschließende Kühlvorrichtung ist zweistufig ausgebildet und wird in beiden Stufen mit Frischluft beschickt. Die Kühlabluft aus der im Röstgutweg auf die Röstkammer folgenden ersten Kühlstufe wird am Ausgang der Röstkammer den Röstabgasen zugemischt und zusammen mit den Röstabgasen im Kreislauf rückgeführt. Die Abluft der zweiten Kühlstufe wird nach mechanischer Reinigung in einem zweiten Fliehkraftabscheider unmittelbar in die Atmosphäre abgeführt. Ähnliche Röstanlagen sind aus DE-37 11 098 C2, DE-40 28 112 C2 und EP-98 387 A1 bekannt. Bei diesen Röstanlagen wird durch die Rückführung der Röstabgase in den Röstprozeß zwar der thermische Wirkungsgrad erhöht und durch die Nachverbrennung eines Teils der Kühlabgase wird auch die Geruchsbelästigung der Umgebung vermindert, doch genügt der thermische Wirkungsgrad und auch das Ausmaß der Reinigung der Abluft nicht erhöhten Anforderungen.

Aus EP-578 902 ist es bekannt, frische Röstgase über Wärmetauscher durch heiße Abgase eines Brenners indirekt zu erwärmen, bevor sie der Röstkammer zugeführt werden. Die Röstabgase werden in einem Zentrifugalabscheider mechanisch gereinigt, bevor sie dem genannten Brenner zur Nachverbrennung zugeführt werden. Die für den Röstprozeß benutzten frischen Röstgase kommen damit nicht mit der Brennerabluft in Berührung und bei der Nachverbrennung werden die Röstabgase von Geruchsstoffen gereinigt. Die bekannte Röstvorrichtung erlaubt aber keine Reinigung der Kühlabgase.

Aus EP-258 348 B1 ist es schließlich zur kontrollierten thermischen Nachverbrennung von oxidierbaren Bestandteilen in Prozeßabgasen bekannt, die in einer Nachverbrennungsvorrichtung zu reinigenden Prozeßabgase vor der Nachverbrennung in einem Wärmetauscher durch Wärmerückgewinnung aus den gereinigten Abgasen, vorzuerwärmen. Um den Brenner der Nachverbrennungsvorrichtung mit gleichbleibender Grundlast und bei konstanten Temperaturbedingungen betreiben zu können, wird dem zu reinigenden Abgas ein Anteil des aus dem Wärmetauscher kommenden, gereinigten Abgases sowie gegebenenfalls Kaltluft zugemischt. Auf diese Weise kann die Konzentration der in dem zu reinigenden Abgas enthaltenen, oxidierbaren Komponenten wie auch die Temperatur des zu reinigenden Abgases konstant gehalten werden. Die Nachverbrennungsvorrichtung umfaßt einen an der Stirnseite eines im wesentlichen zylindrischen Gehäuses angeordneten Brenner, der in ein Hochgeschwindigkeits-Mischrohr mündet, welches seinerseits zu einem Hauptbrennraum führt. Der Wärmetauscher ist mit der Nachverbrennungsvorrichtung zu einer Baueinheit vereinigt und umfaßt eine Vielzahl Wärmetauschrohre, die in einem das Hochgeschwindigkeits-Mischrohr umschließenden Ringraum angeordnet sind.

Es ist Aufgabe der Erfindung, eine Vorrichtung zum Rösten und Kühlen von pflanzlichem Schüttgut, insbesondere Kaffeebohnen, zu schaffen, die mit hohem thermischem Wirkungsgrad sowohl beim Röstprozeß als auch bei der Emissionsminderung arbeitet.

Die Erfindung geht aus von einer Anordnung zum Rösten von pflanzlichem Schüttgut, insbesondere Kaffeebohnen, welche umfaßt:
eine Heizeinrichtung zur Erzeugung eines Röstgasstroms,
eine das Schüttgut in dem Röstgasstrom röstende Rösteinrichtung,
eine das geröstete Schüttgut aus der Rösteinrichtung aufnehmende und in einem Kühlgasstrom kühlende Kühleinrichtung, die ihre Kühlgase an eine Heizeinrichtung abgibt.

Die erfindungsgemäße Verbesserung ist dadurch gekennzeichnet, daß die Heizeinrichtung eine durch Heizgas zu speisende Wärmetauscherstufe umfaßt, die den Wärmeinhalt im wesentlichen der gesamten, von der Kühleinrichtung abgegebenen Kühlgase für die Erzeugung der Röstgase auf ein das Rösten des Schüttguts erlaubendes Wärmeniveau erhöht und als Röstgas an die Rösteinrichtung abgibt.

Der Erfindung liegt die Idee zu Grunde, das durch den Kühlprozeß ohnehin erhöhte Wärmeniveau der Kühlgase ohne Berührung mit Brennerabgasen oder dergleichen in einem Wärmetauscher indirekt auf das Wärmeniveau von Röstgasen zu erhöhen, die Kühl-Abgase also zu Röstgasen umzufunktionieren. Auf diese Weise wird die Wärmeenergie im wesentlichen der gesamten Kühlabgase für den Röstprozeß ausgenutzt und danach kann die Wärmeenergie im wesentlichen der gesamten Röstgase einheitlich wiedergewonnen werden, was den konstruktiven Aufwand reduziert. Auch die Reinigung der Röstabgase gestaltet sich erheblich einfacher. Da die Erwärmung des Gasstroms auf Röstgastemperatur indirekt erfolgt, wird eine geschmackliche Beeinträchtigung des Röstguts vermieden.

Die Heizeinrichtung kann die den Wärmetauscher speisenden Heizgase in einem von den Röstgasen gesonderten Heizgasstrom erzeugen. Ein besonders hoher thermischer Wirkungsgrad ergibt sich, wenn die Heizeinrichtung ferner eine Heizstufe umfaßt, die den Wärmeinhalt im wesentlichen der gesamten, von der Rösteinrichtung abgegebenen Röstgase über das Röstgas-Wärmeniveau hinaus erhöht und als Heizgas an die Wärmetauscherstufe abgibt. Hierbei werden im wesentlichen die gesamten Röstabgase nach einer erneuten Anhebung ihres Wärmeniveaus als Heizgase zur Speisung der Wärmetauscherstufe ausgenutzt.

Eine sehr geringe Schadstoffemission, insbesondere Geruchsemission, läßt sich erzielen, wenn Mittel zur Adsorptionsreinigung oder/und thermischen oder/und katalytischen Reinigung der Röstgase oder/und Heizgase vorgesehen sind. Da im wesentlichen die gesamten Kühlabgase dem Röstprozeß zugeführt werden und im wesentlichen die gesamten Röstabgase gereinigt, insbesondere auf dem Wärmeniveau der Heizgase thermisch oder/und katalytisch gereinigt werden, bevor zumindest ein Teil der Wärmeenergie in der Wärmetauscherstufe gewonnen wird, läßt sich eine sehr effiziente Reinigung der Abluft bei hohem Gesamtwirkungsgrad der Röstvorrichtung erreichen.

Überraschenderweise hat sich gezeigt, daß durch Ausnutzen der gesamten Kühlluft für den Röstvorgang eine Steigerung der Röstqualität erreicht werden kann. Herkömmliche Röstvorrichtungen arbeiten mit einem Röstgasdurchsatz, der beträchtlich kleiner ist als der Kühlluftdurchsatz der zugeordneten Kühlvorrichtung, beispielsweise etwa ein Drittel des Kühlluftdurchsatzes beträgt. Auf Grund des niedrigeren Röstgasdurchsatzes arbeiten herkömmliche Rösteinrichtungen bei vergleichsweise hoher Temperatur der Röstgase in der Größenordnung von 450°C. Die erfindungsgemäße Angleichung des Röstgasdurchsatzes an den Kühlluftdurchsatz erhöht den Röstgasdurchsatz verglichen mit herkömmlichen Anlagen. Der erhöhte Röstgasdurchsatz erlaubt es nun, die gleiche Röstenergie beiverringerter Röstgastemperatur zuzuführen. Die Röstgastemperatur liegt zweckmäßigerweise zwischen 290 bis 390°C und vorzugsweise zwischen 300 und 360°C, was eine gleichmäßigere Röstung des Röstguts ermöglicht.

Wenngleich die Heizstufe auch als elektrische Heizstufe oder Infrarotheizstufe oder dgl. ausgebildet sein kann, so handelt es sich doch bevorzugt um eine die Röstgase einer Schadstoff-Verbrennung unterziehende Brennerstufe. Bei der insbesondere als Gas- oder Ölbrenner ausgebildeten Brennerstufe handelt es sich bevorzugt um einen Gebläsebrenner.

Im Heizgasweg kann zwischen der Heizstufe und der den Wärmeinhalt des Kühlgases auf Röstgas-Wärmeniveau hebenden Wärmetauscherstufe eine das Heizgas katalytisch reinigende Gasreinigungsstufe angeordnet sein. Diese das Heizgas von Geruchsstoffen reinigende Gasreinigungsstufe kann auch zusätzlich zu einer gleichfalls zur Geruchsverringerung eingesetzten, das Röstabgas nachverbrennenden Brennerstufe vorhanden sein.

Im Kühlgasweg zwischen der Kühleinrichtung und der den Wärmeinhalt der Kühlgase auf Röstgas-Wärmeniveau hebenden Wärmetauscherstufe oder/und im Röstgasweg zwischen der Röstgaseinrichtung und der Heizstufe können gleichfalls Gasreinigungsstufen, beispielsweise in Form von Fliehkraftabscheidern, angeordnet sein. Auch kann im Röstgasweg zusätzlich ein Adsorptionsfilter, beispielsweise eines Zeolith-Filters, zur Minderung der Geruchsstoffe vorgesehen sein, selbst wenn die Röstabgase nachfolgend nicht nur auf das Heizgas-Wärmeniveau erwärmt, sondern zur Reinigung nachverbrannt werden.

Eine weitere Erhöhung des gesamten thermischen Wirkungsgrads läßt sich erreichen, wenn die Heizeinrichtung eine weitere, durch die Heizgase der Heizstufe zu speisende Wärmetauscherstufe umfaßt, die den Wärmeinhalt im wesentlichen der gesamten, von der Rösteinrichtung an die Heizstufe abgegebenen Röstgase erhöht. Auf diese Weise kann die Temperatur der Röstgase vor Zuführung zur Heizeinrichtung durch Wärmerückgewinnung aus den Heizgasen erhöht werden. Soweit die Heizeinrichtung für eine Nachverbrennung der Röstabgase sorgt, versteht es sich, daß die weitere Wärmetauscherstufe so angeordnet ist, daß eine hinreichend große Verweildauer der Heizgase auf dem hohen Nachverbrennungs-Temperaturniveau gewährleistet ist.

In einer bevorzugten Ausgestaltung ist vorgesehen, daß die Heizstufe und die Wärmetauscherstufen zu einer Baueinheit zusammengefaßt sind, in der die Wärmetauscherstufen zueinander koaxial eine zentrale, an einem Ende an einen Brenner, insbesondere Gas- oder Ölbrenner, anschließende, rohrförmige Brennkammer umschließen. Eine solche Baueinheit ist vergleichsweise kompakt und sorgt für hinreichend große Verweilzeiten der Heizgase im Bereich der Wärmetauscherstufen und im Bereich einer Nachverbrennungszone.

Die vorstehenden Vorteile lassen sich insbesondere dann erreichen, wenn die Wärmetauscherstufen ringraumförmige, die Brennkammer umschließende Heizgas-Führungskammern umfassen, in welchen eine Vielzahl im wesentlichen längs der Brennkammer sich erstreckende und an ihren Enden in ringförmigen Sammelleitungen mündende Rohre für die Führung der Kühl- bzw. Röstgase angeordnet sind. Um einen günstigeren thermischen Wirkungsgrad zu erreichen, umschließt die Wärmetauscherstufe, die die Kühlgase auf Röstgas-Wärmeniveau erwärmt, die weitere Wärmetauscherstufe radial außen.

Der kompakten Bauweise bei verbessertem thermischem Wirkungsgrad dient es, wenn die Heizgas-Führungskammern einen seriellen Strömungsweg für die Heizgase bilden, insbesondere wenn die Kühlgase oder/und die Röstgase die Rohre entgegen der Strömungsrichtung der Heizgase in den Heizgas-Führungskammern durchströmen. Bei koaxial ineinander liegenden Heizgas-Führungskammern ergibt sich, radial gesehen, ein mäanderförmiger Aufbau.

Das dem Brenner abgewandte Ende der Brennerkammer mündet bevorzugt in einer Pufferkammer bzw. Erweiterung. Die Pufferkammer mindert die Strömungsgeschwindigkeit der Heizgase, bevor sie den Wärmetauscherstufen zugeführt werden und verlängert die Verweildauer der Heizgase in einer Zone hoher für die thermische Reinigung sorgender Temperatur.

Zumindest die den Wärmeinhalt der Kühlgase auf Röstgas-Wärmeniveau anhebende Wärmetauscherstufe ist im Kühlgasweg oder/und im Heizgasweg zweckmäßigerweise durch eine Nebenschlußleitung mit steuerbarem Durchflußquerschnitt überbrückt. Auf diese Weise läßt sich trotz indirekter Erwärmung der Röstgase eine rasch ansprechende Röstgas-Temperaturregelung erreichen.

Der Kühleinrichtung kann Frischluft der Umgebung zugeführt werden. Es hat sich aber als zweckmäßig erwiesen, wenn auch die Abluft weiterer luftgeführter Einrichtungen des Röstprozesses in den Reinigungsprozeß der Rösteinrichtung miteinbezogen werden, indem die Abluft solcher Verarbeitungsstufen, wie z.B. einer Entsteinungsstufe der Kühleinrichtung als Kühl-Zuluft zugeführt wird.

Das Gesamtemissionsniveau der Röstanlage kann auf diese Weise weiter vermindert werden.

Im folgenden werden Ausführungsbeispiele an Hand von Zeichnungen näher erläutert. Hierbei zeigt:
Fig. 1 ein schematisches Blockschaltbild einer erfindungsgemäßen Röstanordnung für pflanzliches Schüttgut, insbesondere Kaffeebohnen;
Fig. 2 eine Schnittansicht einer Heiz- und Wärmetauschereinheit der Anordnung nach Fig. 1;
Fig. 3 eine Variante der Anordnung nach Fig. 1;
Fig. 4 ein schematisches Blockschaltbild einer weiteren erfindungsgemäßen Vorrichtung zum Rösten von pflanzlichem Schüttgut, insbesondere Kaffeebohnen, und
Fig. 5 ein schematisches Blockschaltbild einer Variante der Anorndung nach Fig. 4.

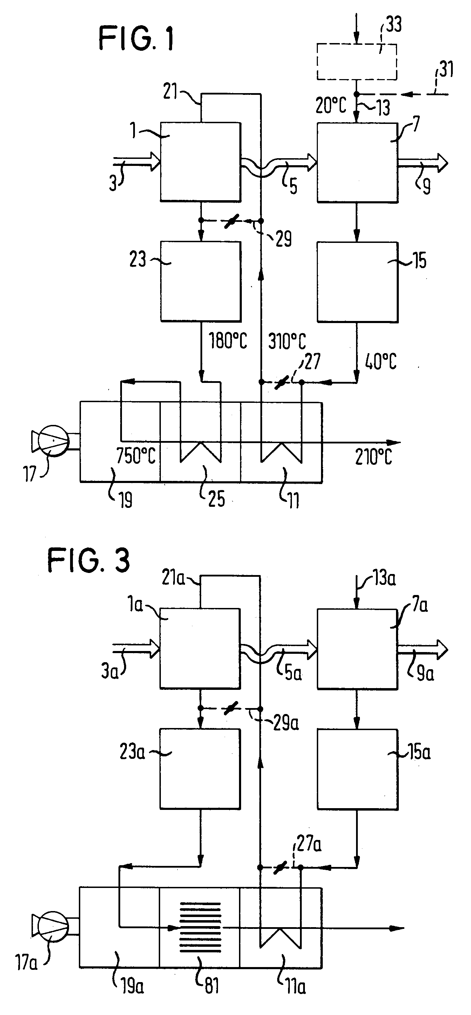

Die in Fig. 1 schematisch dargestellte Kaffeebohnen-Röstanlage umfaßt einen Röster 1, dem die zu röstenden Kaffeebohnen bei 3 zugeführt werden. Die in dem Röster 1 in einem Röstgasstrom gerösteten Kaffeebohnen werden bei 5 einem Kühler 7 zugeführt, in welchem sie in einem Kühlgasstrom gekühlt und bei 9 an eine nicht nähere dargestellte Mahl- oder/und Verpackungsstation abgegeben werden. Der Röster 1 kann den Kaffee chargenweise oder kontinuierlich arbeitend rösten. Entsprechendes gilt für den Kühler 7. Geeignet sind beispielsweise Röster, wie sie in EP-314 827 A1 beschrieben sind. Es versteht sich, daß auch andere Röstertypen verwendet werden können; auch kann die Anlage zum Rösten von anderem pflanzlichem Schüttgut, beispielsweise Kakao, Getreide oder Nüssen, eingesetzt werden.

Der Röster 1 ist so bemessen, daß er den gesamten, den Kühler 7 zur Kühlung des Röstguts durchströmenden Kühlgasstrom nach Erwärmung in einer Wärmetauscherstufe 11 auf Röstgas-Wärmeniveau aufnehmen und für den Röstvorgang ausnutzen kann. Das Kühlgas, bei dem es sich zweckmäßigerweise um Luft handelt, wird im Kühler 7 mit Umgebungstemperatur von beispielsweise von 20°C bei 13 zugeführt und nach dem Kühlprozeß in einer Reinigungsstufe, beispielsweise einem Zentrifugalabscheider 15, von Staub und Röstgutresten, wie z.B. Kaffeehäutchen, gereinigt. Das durch den Kühlvorgang beispielsweise auf 40°C erhöhte Wärmeniveau der Kühlabluft wird in dem Wärmetauscher 11 durch von einem Öl- oder Gasbrenner 17 einer Brennerstufe 19 aufgeheizte Heizgase indirekt auf ein für das Rösten der Kaffeebohnen ausreichendes Röstgas-Wärmeniveau gebracht und dem Röster 1 bei 21 zugeführt. Die in dem Wärmetauscher 11 erwärmten, gereinigten Kühlabgase bilden damit die im Röster 1 die Kaffeebohnen röstenden Röstgase. Der Röster 1 gibt die Röstabgase über eine weitere mechanische Reinigungsstufe, beispielsweise einen Zentrifugalabscheider 23, an eine weitere, im Heizgasweg zwischen der Brennerstufe 19 und der Wärmetauscherstufe 11 gelegene Wärmetauscherstufe 25 ab, die das Röstabgas-Wärmeniveau von beispielsweise 180°C erhöht und das so vorerwärmte Röstabgas an die Brennerstufe 19 zur Nachverbrennung abgibt. Die Brennerstufe 19 erhöht die auf diese Weise im wesentlichen vollständig der Nachverbrennung zugeführten Röstabgase auf eine Temperatur zwischen 700 und 800°C, beispielsweise 750°C, bei welcher im Röstabgas enthaltene Schadstoffe, insbesondere Geruchsstoffe, im wesentlichen vollständig verbrannt werden. Die nachverbrannten Röstabgase bilden die bereits erwärmten Heizgase, deren Wärmeenergie in den Wärmetauscherstufen 25 und 11 zurückgewonnen wird. Am Ausgang der Wärmetauscherstufe 11 haben die Heizgase noch eine Temperatur von beispielsweise 210°C und werden über einen Kamin an die Umgebung abgegeben.

Bei der vorstehend erläuterten Röstanlage wird die gesamte, für die Kühlung des Röstguts in dem Kühler 7 genutzte Kühlluft auch für den Röstvorgang ausgenutzt und zur Beseitigung von Geruchsemissionen thermisch in der Brennerstufe 19 nachbehandelt. Die indirekte Erwärmung der Kühlluft auf Röstgas-Wärmeniveau verhindert, daß die Röstluft in Kontakt mit Heizluftschadstoffen kommt. Im wesentlichen die gesamte Kühl- und Röstabluft wird für die Wärmerückgewinnung ausgenutzt. Es versteht sich, daß insbesondere die Wärmetauscherstufe 11 und der Röster 1 mit Kühl- bzw. Röstgas-Nebenschlußleitungen 27 bzw. 29 überbrückt sein können, deren Strömungsquerschnitt durch Steuerventile änderbar ist, um die in der Wärmetauscherstufe 11 aufzunehmende oder im Röster 1 abzugebende Wärmemenge regulieren zu können.

Da der Röster 1 im wesentlichen den gesamten Luftdurchsatz des Kühlers 7 aufnimmt, muß er für einen höheren Röstgasdurchsatz bemessen sein als herkömmliche Röster vergleichbarer Röstkapazität. Ist der Kühler 7 beispielsweise für einen normierten Luftdurchsatz von 3000 m³ pro Stunde bemessen, so erhöht sich der normierte Durchsatz am Ausgang des Rösters 1 auf 3400 m³ pro Stunde, während letztlich nach Durchströmen der Wärmetauscherstufe 11 ein normierter Durchsatz von 3800 m³ pro Stunde an die Umgebung abgegeben werden. Dieser verglichen mit herkömmlichen Röstern hohe Röstgasdurchsatz erlaubt es, die Temperatur der dem Röster 1 zuzuführenden Röstgase auf 290 bis 390°C, insbesondere zwischen 300 und 360°C, z.B. 310°C, abzusenken. Die Kaffeebohnen werden damit bei verringerter Röstgastemperatur schonender und gleichmäßiger als bisher geröstet.

Der Kühler 7 kann die zum Kühlen verwendete Luft wie bei 31 angedeutet aus der Umgebung ansaugen. Zweckmäßigerweise wird als Kühlluft jedoch die Abluft einer weiteren Verarbeitungsstufe der Röstanlage, beispielsweise die Abluft einer bei 33 angedeuteten Entsteinerstufe, in den Luftreinigungsprozeß mit einbezogen werden.

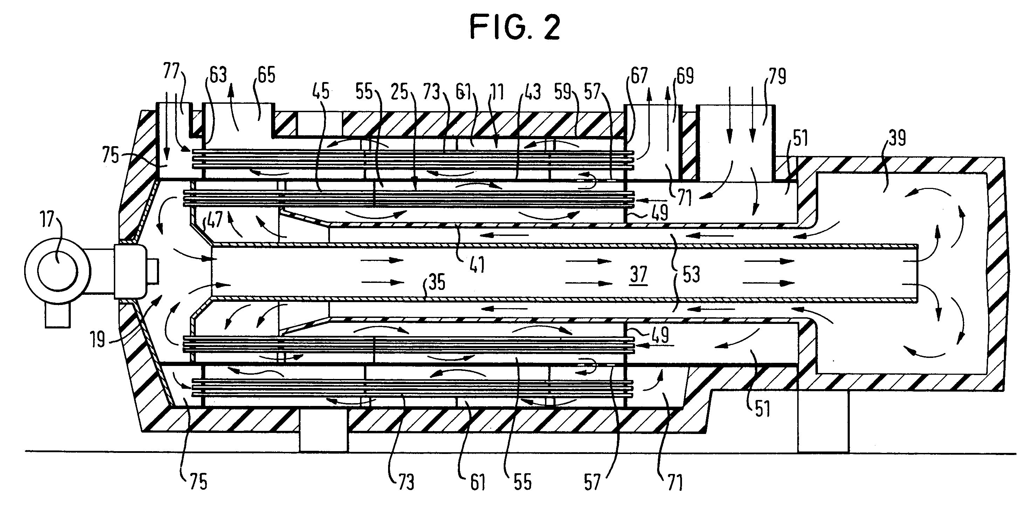

Der Brenner 17, bei welchem es sich vorzugsweise um einen Gebläsebrenner handelt, die einen Ofen bildende Brennerstufe 19 sowie die beiden Wärmetauscherstufen 11 und 25 sind zu einer blockförmigen Baueinheit vereinigt. Fig. 2 zeigt Einzelheiten dieser Baueinheit. Die Brennerstufe 19 hat eine bezogen auf ihren Durchmesser lange, von einem Rohr 35 umschlossene Brennkammer 37, an deren einem Ende der Brenner 17 angeordnet ist und die mit ihrem anderen Ende in einer Pufferkammer 39 mündet. Die Wärmetauscherstufen 11, 25 umschließen das Rohr 35 koaxial, wobei die Wärmetauscherstufe 11 die Wärmetauscherstufe 25 radial außen koaxial umschließt. Die Wärmetauscherstufe 25 wird nach radial innen durch eine das Rohr 35 mit radialem Abstand umschließende Rohrwand 41 und nach radial außen durch eine Rohrwand 43 begrenzt. Zwischen den Rohrwänden 41, 43 erstreckt sich etwa parallel zu dem Rohr 35 und in dessen Umfangsrichtung verteilt und Vielzahl Tauscherrohre 45 die an ihrem den Brenner 17 benachbarten Ende durch eine das Rohr 35 zur Rohrwand 43 hin abschließende Stirnwand 47 und an ihrem anderen Ende durch eine Endwand 49 eines auf dieser Seite anschließenden die Rohrwand 41 ringförmig umschließenden Sammelraums 51 hindurchtreten. Die Rohrwand 41 bildet die radial innere Begrenzung des Sammelraums 51 und beläßt zwischen sich und dem Rohr 35 eine ringraumförmige Heizgas-Führungskammer 53, die die Pufferkammer 39 mit einem dem Brenner 17 zugewandten Einlaßende eines zwischen den Rohrwänden 41, 43 längs der Tauscherrohre 45 erstreckenden Heizgas-Führungskammer 55 verbindet. Dem Sammelraum 51 benachbart ist in der Rohrwand 43 in Umfangsrichtung verteilt eine Vielzahl Durchtrittsöffnungen 57 vorgesehen, durch die die Heizgase in eine zwischen der Rohrwand 43 und einer Außenwand 59 gebildete, zum Rohr 35 koaxiale Heizgas-Führungskammer 61 der Wärmetauscherstufe 11 übertreten können. Die Heizgas-Führungskammer 61 ist an ihrem brennerseitigen Ende durch eine die Rohrwand 43 mit der Außenwand 59 verbindende Stirnwand 63 abgeschlossen und im Bereich der Stirnwand 63 mit einem Auslaß 65 versehen. Am pufferkammerseitigen Ende ist nahe den Öffnungen 57, jedoch zwischen diesen und dem Ringraum 51, eine weitere Stirnwand zwischen der Rohrwand 43 und der Außenwand 59 vorgesehen. Die Stirnwand 67 begrenzt zusammen mit der Rohrwand 43 und der Außenwand 59 einen weiteren, mit einem Auslaß 69 versehenen, ringförmigen Sammelraum 71. Längs der Heizgas-Führungskammer 61 erstreckt sich in Umfangsrichtung verteilt eine Vielzahl Tauscherrohre 73, die ähnlich den Tauscherrohren 45 mit ihren offenen Enden durch die Stirnwände 63, 67 treten und einerseits in dem Sammelraum 71 und andererseits in einem ringförmigen, durch die Rohrwand 43, die Außenwand 59 und die Stirnwand 63 begrenzten Sammelraum 75 münden. Der Sammelraum 75 ist mit einer Einlaßöffnung 77 versehen. Eine durch die Gehäusewand 59 führende Einlaßöffnung des Ringraums 51 ist bei 79 dargestellt.

Die aus dem Fliehkraftabscheider 23 am Ausgang des Rösters 1 auftretenden Heizgase werden über die Einlaßöffnung 79 zugeführt und über den Ringraum 51 auf die Tauscherrohre 45 der Wärmetauscherstufe 25 verteilt. Die Tauscherrohre 45 münden im Bereich des Brenners 17 in der Brennkammer 37, wo sie auf die für die thermische Nachverbrennung erforderliche Temperatur, beispielsweise 750°C, aufgeheizt werden. Um eine hinreichend große und für die thermische Nachverbrennung ausreichende Reaktionszeit sicherzustellen, strömen die auf hoher Temperatur sich befindenden Heizgase in Richtung der in Fig. 2 gezeigten Pfeile durch das Rohr 35 in die Pufferkammer 39 und längs der Heizgas-Führungkammer 53 zurück zum brennerseitigen Ringeinlaß der die Tauscherrohre 45 enthaltenden Heizgas-Führungskammer 55 der Wärmetauscherstufe 25, wo sie für eine Vorerwärmung der aus dem Röster zugeführten Gase sorgen. Die aus der Heizgas-Führungskammer 55 über die Öffnungen 57 in die Heizgas-Führungskammer 61 der Wärmetauscherstufe 11 übertretenden Heizgase erwärmen hier die in den Tauscherrohren 73 von der Einlaßöffnung 77 zur Auslaßöffnung 69 strömenden Kühlabgase des Kühlers 9 auf Röstgas-Wärmeniveau und treten dann über die Auslaßöffnung 63 aus. Es bleibt zu erwähnen, daß die Strömungsrichtung in den Tauscherrohren 45, 73 jeweils der Strömungsrichtung der Heizgase in den Heizgas-Führungskammern 55 bzw. 61 entgegengerichtet ist. Die Tauscherrohre 45,73 verhindern, daß die darin geführten Gase in Kontakt mit den Heizgasen kommen.

Die im folgenden erläuterten Ausführungsbeispiele machen von dem an Hand von Fig. 1 erläuterten Prinzip Gebrauch. Gleich wirkende Komponenten sind mit den Bezugszahlen aus Fig. 1 bezeichnet und zur Unterscheidung mit einem Buchstaben versehen. Zur Erläuterung wird auf die Beschreibung der Fig. 1 Bezug genommen.

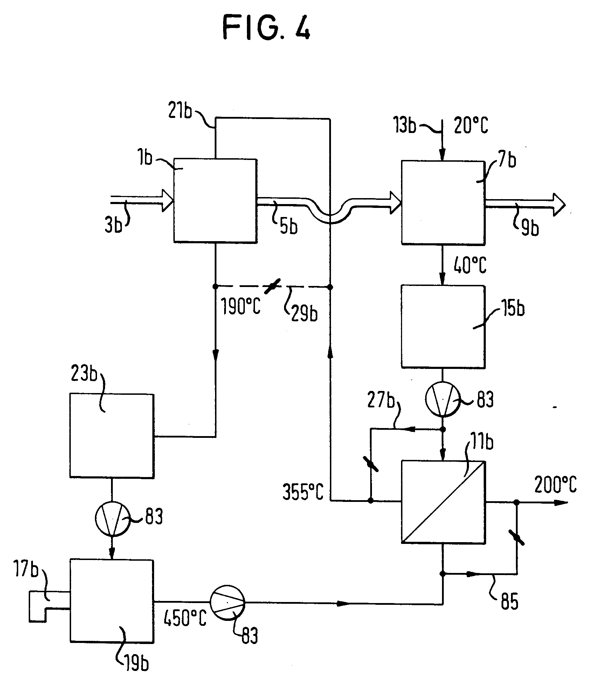

Fig. 3 zeigt eine Variante der Anlage aus Fig. 1, die sich in erster Linie dadurch unterscheidet, daß zur Reinigung der Heizgase von Geruchsstoffen eine katalytische Verbrennung der Heizgase in einer Katalysatorstufe 81 vorgesehen ist, die zwischen der Brennerstufe 19a und der Wärmetauscherstufe 11a in den Heizgasweg eingefügt ist. Die aus dem Fliehkraftabscheider 23a am Ausgang des Rösters 1a abgegebenen Röstabgase werden in der Brennerstufe 19a auf ein für die katalytische Verbrennung ausreichendes Heizgas-Wärmeniveau gebracht und durchlaufen dann die Katalysatorstufe 81, bevor die Nachverbrennungswärme in der Wärmetauscherstufe 11a für die Erzeugung der Röstgase rückgewonnen wird.

Die Brennerstufe 19a, die Katalysatorstufe 81 und die Wärmetauscherstufe 11a kann in der an Hand von Fig. 2 erläuterten Weise zu einer Baueinheit zusammengefaßt werden, wobei zumindest die Brennerstufe 19a und die Wärmetauscherstufe 11a den dort erläuterten koaxialen Aufbau haben können. Die Katalysatorstufe 81 kann hierbei axial neben der Wärmetauscherstufe 11a oder aber auch koaxial übereinander bezogen auf die Wärmetauscherstufe 11a angeordnet sein. Bei dem Katalysator der Katalysatorstufe 81 kann es sich um einen Oxidationskatalysator handeln, der für eine Verweildauer der Heizgase zwischen 0,05 bis 0,1 Sekunden ausgelegt ist bei einer Reaktionstemperatur zwischen 320°C und 420°C.

Fig. 4 zeigt eine Variante der Röstanlage, bei der die Brennerstufe 19b als Combustor ausgebildet ist und der Brenner 17b im Impulsbetrieb die Röstabgase bei Brennimpulsen von etwa 0,1 Sekunden Dauer auf etwa 700 bis 800°C erwärmt. Zusätzlich zu den vorangegangen erläuterten Ausführungsbeispielen sind in Fig. 4 noch Gebläse 83 am Eingang und Ausgang des Combustors 19b sowie am Ausgang des Fliehkraftabscheiders 15b dargestellt. Zusätzlich oder alternativ zu den Nebenschlußleitungen 27b und 29b kann auch wie bei 85 dargestellt im Heizgasweg der Wärmetauscherstufe 11b eine Nebenschlußleitung mit einem der Wärmemengenregulierung dienenden Ventil oder einer Klappe vorgesehen sein. Der Impulsbrenner 17b verbrennt Gas oder Öl im wesentlichen rückstandsfrei, wobei die Brennabgase mit den zugeführten Röstabgasen in dem Combustor gemischt werden.

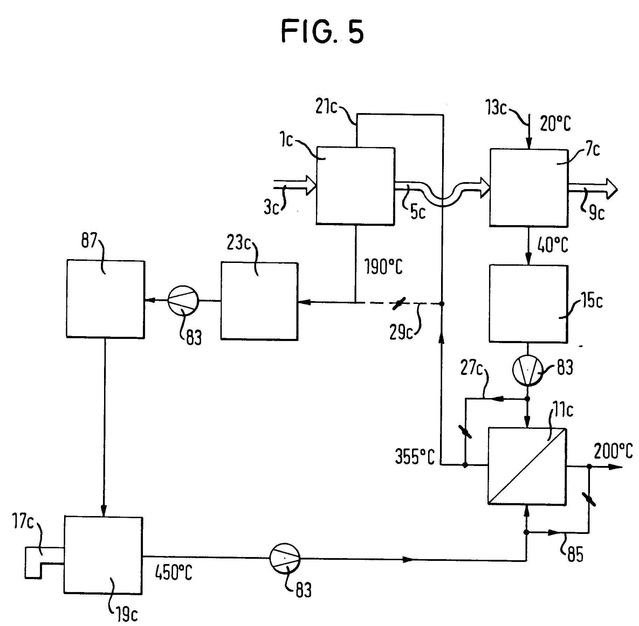

Fig. 5 zeigt eine Variante der Röstanlage nach Fig. 4, bei der zusätzlich zwischen dem Zentrifugalabscheider 23c und dem Gebläsebrenner 19c für Öl oder Gas ein Adsorptionsfilter 87 in den Strömungsweg der Röstabgase, beispielsweise ein Filter auf der Basis von Zeolith-Pulver, angeordnet ist. Der Brenner 19c muß damit das Temperaturniveau der Röstabgase nur auf das für die Anhebung des Wärmeniveaus der Kühlabgase auf Röstgas-Wärmeniveau erforderliche Maß erwärmen. Die Gebläse 83 und die Nebenschlußleitung 85 können auch hier in der dargestellten Weise vorgesehen sein.

Es versteht sich, daß auch in den Ausführungsbeispielen der Fig. 4 und 5 der Combustor 19b bzw. Gebläsebrenner 19c jeweils mit der Wärmetauscherstufe 11b bzw. 11c zu einer Baueinheit vereinigt sein kann.

Wenngleich in den Ausführungsbeispielen der Fig. 3 bis 5 nicht näher dargestellt, so kann auch hier die Kühlzuluft entweder aus der Umgebung oder aus der Abluft einer weiteren Verarbeitungsstufe, beispielsweise einer Entsteinungsstufe, entnommen werden.

## Patentansprüche

1. Anordnung zum Rösten von pflanzlichem Schüttgut, insbesondere Kaffeebohnen, umfassend
- eine Heizeinrichtung (11, 17, 19, 25) zur Erzeugung eines Röstgasstroms,
- eine das Schüttgut in dem Röstgasstrom röstende Rösteinrichtung (1),
- eine das geröstete Schüttgut aus der Rösteinrichtung (1) aufnehmende und in einem Kühlgasstrom kühlende Kühleinrichtung (7), die zumindest einen Teil ihrer Kühlgase an die Heizeinrichtung (11,17, 19, 25) abgibt,
**dadurch gekennzeichnet**, daß die Heizeinrichtung (11, 17, 19, 25) eine durch Heizgase zu speisende Wärmetauscherstufe (11) umfaßt, die den Wärmeinhalt im wesentlichen der gesamten, von der Kühleinrichtung (7) abgegebenen Kühlgase für die Erzeugung der Röstgase auf ein das Rösten des Schüttguts erlaubendes Wärmeniveau erhöht und als Röstgas an die Rösteinrichtung (1) abgibt.

2. Anordnung nach Anspruch 1, **dadurch gekennzeichnet**, daß die Temperatur der von der Wärmetauscherstufe (11) abgegebenen Röstgase zwischen 290°C und 390°C, insbesondere zwischen 300°C und 360°C, liegt.

3. Anordnung nach Anspruch 1 oder 2, **dadurch gekennzeichnet**, daß im Kühlgasweg zwischen der Kühleinrichtung (7) und der den Wärmeinhalt der Kühlgase auf Röstgas-Wärmeniveau hebenden Wärmetauscherstufe (11) eine Gasreinigungsstufe (15) angeordnet ist.

4. Anordnung nach einem der Ansprüche 1 bis 3, **dadurch gekennzeichnet**, daß die Heizeinrichtung (11, 17, 19, 25) ferner eine Heizstufe (19) umfaßt, die den Wärmeinhalt im wesentlichen der gesamten von der Rösteinrichtung (1) abgegebenen Röstgase über das Röstgas-Wärmeniveau hinaus erhöht und als Heizgas an die Wärmetauscherstufe (11) abgibt.

5. Anordnung nach Anspruch 4, **dadurch gekennzeichnet**, daß die Heizstufe als die Röstgase einer Schadstoffverbrennung unterziehende Brennerstufe (19; 19b) ausgebildet ist.

6. Anordnung nach Anspruch 5, **dadurch gekennzeichnet**, daß die Brennerstufe (19b) einen Gas- oder Öl-Impulsbrenner (17b) umfaßt.

7. Anordnung nach einem der Ansprüche 4 bis 6, **dadurch gekennzeichnet**, daß im Heizgasweg zwischen der Heizstufe (19a) und der dem Wärmeinhalt der Kühlgase auf Röstgas-Wärmeniveau hebenden Wärmetauscherstufe (11a) eine das Heizgas oxidationskatalytisch reinigende Gasreinigungsstufe (81) angeordnet ist.

8. Anordnung nach einem der Ansprüche 4 bis 7, **dadurch gekennzeichnet**, daß im Röstgasweg zwischen der Rösteinrichtung (1) und der Heizstufe (19) eine Gasreinigungsstufe (23) angeordnet ist.

9. Anordnung nach einem der Ansprüche 1 bis 8, **dadurch gekennzeichnet**, daß Mittel (19; 81; 87) zur Adsorptionsreinigung oder/und thermischen Reinigung oder/und katalytischen Reinigung der Röstgase oder/und Heizgase vorgesehen sind.

10. Anordnung nach einem der Ansprüche 1 bis 9, **dadurch gekennzeichnet**, daß im Röstgasweg ein Adsorptionsfilter (87) angeordnet ist.

11. Anordnung nach einem der Ansprüche 4 bis 10, **dadurch gekennzeichnet**, daß die Heizeinrichtung (11, 17, 19, 25) eine weitere, durch die Heizgase der Heizstufe zu speisende Wärmetauscherstufe (25) umfaßt, die den Wärmeinhalt im wesentlichen der gesamten, von der Rösteinrichtung (1) an die Heizstufe (19) abgegebenen Röstgase erhöht.

12. Anordnung nach Anspruch 11, **dadurch gekennzeichnet**, daß die Heizstufe (19) und die Wärmetauscherstufen (11, 25) zu einer Baueinheit zusammengefaßt sind, in der die Wärmetauscherstufen (11, 25) zueinander koaxial eine zentrale, an einem Ende an einen Brenner (17), insbesondere Gas- oder Ölbrenner, anschließende, rohrförmige Brennkammer (37) umschließen.

13. Anordnung nach Anspruch 12, **dadurch gekennzeichnet**, daß die Wärmetauscherstufen (11, 25) ringraumförmige, die Brennkammer (37) umschließende Heizgas-Führungskammern (55, 61) umfassen, in welchen eine Vielzahl im wesentlichen längs der Brennkammer (37) sich erstreckende und an ihren Enden in ringförmigen Sammelräumen (51, 71, 75) mündende Rohre (45, 73) für die Führung der Kühl- bzw. Röstgase angeordnet sind.

14. Anordnung nach Anspruch 13, **dadurch gekennzeichne**t, daß die Brennkammer (37) und die Heizgas-Führungskammern (55, 61) einen seriellen Strömungsweg für die Heizgase bilden.

15. Anordnung nach Anspruch 13 oder 14, **dadurch gekennzeichnet**,daß die Kühlgase oder/und die Röstgase die Rohre (45, 73) entgegen der Strömungsrichtung der Heizgase in der Heizgas-Führungskammer (55, 61) durchströmen.

16. Anordnung nach einem der Ansprüche 12 bis 15, **dadurch gekennzeichnet**, daß die die Kühlgase auf Röstgas-Wärmeniveau erwärmende Wärmetauscherstufe (11) die weitere Wärmetauscherstufe (25) radial außen umschließt.

17. Anordnung nach einem der Ansprüche 12 bis 16, **dadurch gekennzeichnet**, daß das dem Brenner (17) abgewandte Ende der Brennkammer (37) in einer Pufferkammer (39) mündet.

18. Anordnung nach einem der Ansprüche 1 bis 17, **dadurch gekennzeichnet**, daß zumindest die den Wärmeinhalt der Kühlgase auf Röstgas-Wärmeniveau anhebende Wärmetauscherstufe (11) im Kühlgasweg oder/und im Heizgasweg durch eine Nebenschlußleitung (27; 85) mit steuerbarem Durchflußquerschnitt überbrückt ist.

19. Anordnung nach einem der Ansprüche 1 bis 18, **dadurch gekennzeichnet**, daß der Kühleinrichtung (7) Abluft einer weiteren Verarbeitungsstufe, insbesondere einer Entsteinungsstufe (33) als Kühlluft zuführbar ist.

## Claims

1. Arrangement for roasting vegetable bulk material, in particular coffee beans, comprising
- a heating means (11, 17, 19, 25) for producing a roasting-gas stream,
- a roasting means (1) which roasts the bulk material in the roasting-gas stream,
- a cooling means (7) which receives the roasted bulk material from the roasting means (1), cools said material in a cooling-gas stream and discharges at least a fraction of its cooling gases to the heating means (11, 17, 19, 25),
characterized in that the heating means (11, 17, 19, 25) comprises a heat-exchanger stage (11) which is to be supplied by heating gases and, for producing the roasting gases, increases the heat content of essentially all the cooling gases discharged from the cooling means (7) to a heat level permitting the bulk material to be roasted, and discharges the same as roasting gas to the roasting means (1).

2. Arrangement according to Claim 1, characterized in that the temperature of the roasting gases discharged from the heat-exchanger stage (11) lies between 290°C and 390°C, in particular between 300°C and 360°C.

3. Arrangement according to Claim 1 or 2, characterized in that a gas cleaning stage (15) is arranged in the cooling-gas path between the cooling means (7) and the heat-exchanger stage (11) which increases the heat content of the cooling gases to roasting-gas heat level.

4. Arrangement according to one of Claims 1 to 3, characterized in that, furthermore, the heating means (11, 17, 19, 25) comprises a heating stage (19) which increases the heat content of essentially all the roasting gases discharged from the roasting means (1) to beyond the roasting-gas heat level, and discharges the same as heating gas to the heat-exchanger stage (11).

5. Arrangement according to Claim 4, characterized in that the heating stage is designed as a burner stage (19; 19b) which subjects the roasting gases to harmful-substance combustion.

6. Arrangement according to Claim 5, characterized in that the burner stage (19b) comprises a gas or oil pulse burner (17b).

7. Arrangement according to one of Claims 4 to 6, characterized in that a gas cleaning stage (81) which cleans the heating gas by way of an oxidation catalyst is arranged in the heating-gas path between the heating stage (19a) and the heat-exchanger stage (11a) which increases the heat content of the cooling gases to roasting-gas heat level.

8. Arrangement according to one of Claims 4 to 7, characterized in that a gas cleaning stage (23) is arranged in the roasting-gas path between the roasting means (1) and the heating stage (19).

9. Arrangement according to one of Claims 1 to 8, characterized in that provision is made for means (19; 81; 87) for adsorption cleaning or/and thermal cleaning or/and catalytic cleaning of the roasting gases or/and heating gases.

10. Arrangement according to one of Claims 1 to 9, characterized in that an adsorption filter (87) is arranged in the roasting-gas path.

11. Arrangement according to one of Claims 4 to 10, characterized in that the heating means (11, 17, 19, 25) comprises a further heat-exchanger stage (25) which is to be supplied by the heating gases of the heating stage and increases the heat content of essentially all the roasting gases discharged from the roasting means (1) to the heating stage (19).

12. Arrangement according to Claim 11, characterized in that the heating stage (19) and the heat-exchanger stages (11, 25) are combined to form a structural unit in which the heat-exchanger stages (11, 25), coaxial with one another, enclose a central, tubular combustion chamber (37), one end of which adjoins a burner (17), in particular a gas or oil burner.

13. Arrangement according to Claim 12, characterized in that the heat-exchanger stages (11, 25) comprise heating-gas conducting chambers (55, 61) which are in the form of annular spaces, enclose the combustion chamber (37) and in which there are arranged a multiplicity of tubes (45, 73) which extend essentially along the combustion chamber (37), open, at their ends, into annular collecting spaces (51, 71, 75) and are intended for conducting the cooling or roasting gases.

14. Arrangement according to Claim 13, characterized in that the combustion chamber (37) and the heating-gas conducting chambers (55, 61) form a serial flow path for the heating gases.

15. Arrangement according to Claim 13 or 14, characterized in that the cooling gases or/and the roasting gases flow through the tubes (45, 73) counter to the flow direction of the heating gases in the heating-gas conducting chamber (55, 61).

16. Arrangement according to one of Claims 12 to 15, characterized in that the heat-exchanger stage (11) which heats the cooling gases to roasting-gas heat level encloses the further heat-exchanger stage (25) externally in the radial direction.

17. Arrangement according to one of Claims 12 to 16, characterized in that that end of the combustion chamber (37) which is remote from the burner (17) opens into a buffer chamber (39).

18. Arrangement according to one of Claims 1 to 17, characterized in that at least the heat-exchanger stage (11) which increases the heat content of the cooling gases to roasting-gas heat level is bridged, in the cooling-gas path or/and in the heating-gas path, by a bypass line (27; 85) with controllable throughflow cross section.

19. Arrangement according to one of Claims 1 to 18, characterized in that, as cooling air, the cooling means (7) may be fed waste air from a further processing stage, in particular a stoning stage (33).

## Revendications

1. Installation destinée à la torréfaction des produits en vrac d'origine végétale, en particulier, des grains de café, comportant :
- un dispositif de chauffage (11, 17, 19, 25) pour créer un flux de gaz de calcination,
- un dispositif de grillage (1), torréfiant le produit en vrac dans le flux de gaz de calcination,
- un dispositif de refroidissement (7), recevant le produit en vrac torréfié provenant du dispositif de grillage (1), le refroidissant dans un flux de gaz de refroidissement et émettant au moins une partie de ses gaz de refroidissement au niveau du dispositif de chauffage (11, 17, 19, 25),
caractérisée en ce que le dispositif de chauffage (11, 17, 19, 25) comporte un étage d'échangeur thermique (11) à alimenter par des gaz chauds qui, pour créer les gaz de calcination, élève la capacité calorifique, notamment, de tous les gaz de refroidissement délivrés par le dispositif de refroidissement (7), à un niveau thermique permettant le grillage du produit en vrac et qui délivre du gaz de calcination au niveau du dispositif de grillage (1).

2. Installation selon la revendication 1, caractérisée en ce que la température des gaz de calcination délivrés par l'étage de l'échangeur thermique (11), se situe entre 290°C et 390°C, et plus particulièrement, entre 300°C et 360°C.

3. Installation selon la revendication 1 ou 2, caractérisée en ce qu'un étage d'épuration des gaz (15) est placé dans le passage des gaz de refroidissement, entre le dispositif de refroidissement (7) et l'étage de l'échangeur thermique (11) élevant la capacité thermique des gaz de refroidissement au niveau thermique du gaz de calcination.

4. Installation selon l'une des revendications 1 à 3, caractérisée en ce que la batterie de chauffe (11, 17, 19, 25) comporte, en outre, un étage de chauffe (19) qui fait s'élever la capacité thermique, notamment, de la globalité des gaz de calcination émis par le dispositif de grillage (1), au-dessus du niveau thermique du gaz de calcination et qui délivre du gaz chaud au niveau de l'étage de l'échangeur thermique (11).

5. Installation selon la revendication 4, caractérisée en ce que l'étage de chauffe est conçu en tant qu'étage de brûleur (19; 19b) soumettant les éléments polluants des gaz de calcination à une combustion.

6. Installation selon la revendication 5, caractérisée en ce que l'étage de brûleur (19b) comporte un brûleur à impulsion à gaz ou à fuel (17b).

7. Installation selon l'une des revendications 4 à 6, caractérisée en ce qu'un étage d'épuration des gaz (81), épurant le gaz chaud par procédé d'oxydation catalytique, est placé dans le passage du gaz chaud, entre l'étage de chauffe (19a) et l'étage de l'échangeur thermique (11a) élevant la capacité thermique des gaz de refroidissement au niveau thermique du gaz de calcination.

8. Installation selon l'une des revendications 4 à 7, caractérisée en ce qu'un étage d'épuration des gaz (23) est placé dans le passage du gaz de calcination, entre le dispositif de grillage (1) et l'étage de chauffe (19).

9. Installation selon l'une des revendications 1 à 8, caractérisée en ce que des moyens (19; 81; 87) sont prévus pour l'épuration par adsorption ou/et l'épuration thermique ou/et l'épuration catalytique des gaz de calcination ou/et des gaz chauds.

10. Installation selon l'une des revendications 1 à 9, caractérisée en ce qu'un filtre adsorbant (87) est placé dans le passage du gaz de calcination.

11. Installation selon l'une des revendications 4 à 10, caractérisée en ce que le dispositif de chauffage (11, 17, 19, 25) comporte un autre étage d'échangeur thermique (25) à alimenter par les gaz chauds de l'étage de chauffe, qui augmente la capacité thermique, notamment, de l'ensemble des gaz de calcination émis par le dispositif de grillage (1), au niveau de l'étage de chauffe (19).

12. Installation selon la revendication 11, caractérisée en ce que l'étage de chauffe (19) et les étages de l'échangeur thermique (11, 25) sont groupés en une unité modulaire, dans laquelle les étages de l'échangeur thermique (11, 25) enferment coaxialement l'un à l'autre une chambre de combustion (37), centrale, de forme tubulaire, raccordée à une extrémité à un brûleur (17), notamment un brûleur à gaz ou à fuel.

13. Installation selon la revendication 12, caractérisée en ce que les étages de l'échangeur thermique (11, 25) comportent des chambres de conduite des gaz chauds (55, 61) en forme d'espace annulaire, entourant la chambre de combustion (37), dans lesquelles sont disposés, pour guider les gaz de calcination ou de refroidissement, une multitude de tubes (45, 73) s'étendant, principalement, le long de la chambre de combustion (37) et dont les extrémités débouchent dans des espaces collecteurs (51, 71, 75) en forme d'anneau.

14. Installation selon la revendication 13, caractérisée en ce que la chambre de combustion (37) et les chambres de conduite des gaz chauds (55, 61) forment une voie de conduite en série pour les gaz chauds.

15. Installation selon la revendication 13 ou 14, caractérisée en ce que les gaz de refroidissement ou/et les gaz de calcination traversent les tubes (45, 73) en sens inverse du courant des gaz chauds dans les chambres de conduite des gaz chauds (55, 61).

16. Installation selon l'une des revendications 12 à 15, caractérisée en ce que l'étage de l'échangeur thermique (11) réchauffant les gaz de refroidissement au niveau thermique du gaz de calcination entoure, à l'extérieur et radialement, l'autre étage de l'échangeur thermique (25).

17. Installation selon l'une des revendications 12 à 16, caractérisée en ce que l'extrémité de la chambre de combustion (37) opposée au brûleur (17) débouche dans une chambre tampon (39).

18. Installation selon l'une des revendications 1 à 17, caractérisée en ce qu'au moins l'étage de l'échangeur thermique (11) élevant la capacité thermique des gaz de refroidissement au niveau thermique des gaz de calcination est ponté par une canalisation secondaire parallèle (27; 85) à débit variable dans le passage des gaz de refroidissement ou/et passage des gaz chauds.

19. Installation selon l'une des revendications 1 à 18, caractérisée en ce que l'air s'échappant d'un autre étage de traitement, notamment, d'un étage de dénoyautage (33), peut alimenter, en tant qu'air de refroidissement, le dispositif de refroidissement (7).
